# EUROPEAN PATENT APPLICATION

(11) **EP 2 392 797 A2**
(43) Date of publication of application: **07.12.2011**
(21) Application number: 11168318.1
(22) Date of filing: 31.05.2011
(51) Int. Cl.: F02C 7/22

(54) **Gas turbine combustion system with rich premixed fuel reforming and methods of use thereof**

(30) Priority: 02.06.2010 US 792037
(71) Applicant: General Electric Company, Schenectady, NY 12345 (US)
(72) Inventor: Widener, Stanley Kevin, Greenville, SC 29615 (US); Hadley, Mark Allan, Greenville, SC 29615 (US)
(74) Representative: Gray, Thomas

(57) **Abstract**

A gas turbine engine system (10) includes a compressor (12), a combustor (14), and a turbine (16); a fuel system (20) comprising one or more fuel circuits (102) configured to provide fuel from a fuel flow to the combustor; a non-catalytic fuel reformer (32, 100) in fluid communication with the one or more fuel circuits, wherein the non-catalytic fuel reformer is configured to receive an oxidant from an oxidant flow and a fraction of fuel in the one or more fuel circuits in a predetermined ratio and reform the fraction of the fuel to produce a reformate; and a control system (18) configured to regulate at least one of fuel flow and oxidant flow to the non-catalytic fuel reformer to control a Modified Wobbe Index of the fuel entering the combustor..

## Description

### BACKGROUND OF THE INVENTION

This disclosure relates generally to gas turbine engine combustion systems, and more particularly, to methods and apparatus for fuel reforming to enhance the operability of the combustion systems.

One class of gas turbine combustors achieve low NOx emissions levels by employing lean premixed fuel combustion process wherein the fuel and an excess of air that is required to bum all the fuel are mixed prior to combustion to control and limit thermal NOx production. This class of combustors, often referred to as Dry Low NOx (DLN) combustors, are continually required to perform at higher and higher efficiencies while producing less and less undesirable air polluting emissions. Higher efficiencies in gas turbines with DLN combustors are generally achieved by increasing overall gas temperature in the combustion chambers. Emissions are typically reduced by lowering the maximum gas temperature in the combustion chamber. The demand for higher efficiencies which results in hotter combustion chambers conflicts to an extent with the regulatory requirements for low emission DLN gas turbine combustion systems. Moreover, DLN combustors are usually limited by pressure oscillations known as "dynamics" in regards to their ability to accommodate different fuels. This is due to the change in pressure ratio of the injection system that results from changes in the volumetric fuel flow required. This constraint is captured by the Modified Wobbe Index; i.e., the combustion system will have a design Wobbe number for improved dynamics. The Modified Wobbe Index (MWI) is proportional to the lower heating value in units of BTU/scf and inversely proportional to the square root of the product of the specific gravity of the fuel relative to air and the fuel temperature in degrees Rankine.

One effect of operating in a lean premixed combustion mode is that the combustor can experience unwanted pressure oscillations. Depending on the magnitude of the oscillation amplitude, these pressure oscillations could damage combustion hardware. In addition, if the fuel-air mixture in a combustion chamber is too lean, excessive emissions of carbon monoxide (CO) and unburned hydrocarbon (UHC) can occur. CO and UHC emissions result from incomplete fuel combustion. The temperature in the reaction zone must be sufficiently high to support complete combustion or the chemical combustion reactions will be quenched before achieving equilibrium.

One method for improving this tradeoff is by adding hydrogen or other non-methane hydrocarbon fuel species to the standard fuel to increase reactivity in the combustor. Through the addition of fully premixed highly reactive fuels to the standard fuel, the combustor head-end can be operated with a lower fuel-to-air ratio while maintaining a stable flame and adequate CO and UHC reactivity for increased engine turn down. Addition of reactive fuels such as hydrogen can enable certain fuel distributions that produce lower NOx. This method however, requires additional hydrogen storage or production onsite, as well as a metering system for injecting the desired amounts of hydrogen into the fuel stream. One current method for eliminating these costs is by reforming the turbine fuel to produce hydrogen within the gas turbine fuel delivery system.

Catalytic reformers have been used to create hydrogen from a fuel to feed to the combustor. The catalytic reformer can be disposed remotely from the combustion system, or it can be disposed within the combustion system in fluid communication with the turbine fuel. By producing hydrogen from the fuel itself, there is no need for on-site hydrogen storage, and in the case of an in-line reformer, no need for a hydrogen metering system. Catalytic reformers, however, can require regular maintenance. For example, the catalyst activity can diminish over time thereby requiring the reformer to be recharged with fresh catalyst. Another potential issue is the reformer catalyst becoming poisoned, for instance by sulfur in the fuel, preventing the hydrogen from being properly formed from the fuel. In both cases, it will be necessary to change the catalyst. Depending on system design, an increase in exhaust emissions could occur while the catalytic reformer is off-line, or the gas turbine may even have to be taken offline in order to change the catalyst.

Another method for improving this tradeoff is to control the MWI of the fuel, either by controlling the fuel temperature, or by blending the fuel with inert gas. Such a control system can compensate for changes in the incoming fuel gas composition that may drive the MWI to unfavorable conditions. It can also change the MWI to adjust for changes in the operating condition of the gas turbine, either from changes in the ambient atmosphere or in the load demand. However, the control system would require a heat exchanger with associated controls and heat source, or a source of inert gas either stored or produced on site.

### BRIEF DESCRIPTION OF THE INVENTION

According to one aspect of the invention a gas turbine engine system includes a compressor, a combustor, and a turbine; a fuel system comprising one or more fuel circuits configured to provide fuel to the combustor; a non-catalytic fuel reformer in fluid communication with the one or more fuel circuits, wherein the non-catalytic fuel reformer is configured to receive an oxidant and a fraction of the fuel in the one or more fuel circuits in a fuel-rich ratio and reform the fraction of the fuel to produce a reformate; and a control system configured to regulate at least one of fuel flow and oxygen flow to the non-catalytic fuel reformer to control a Modified Wobbe Index (MWI) of the fuel entering the combustor.

According to another aspect of the invention a method for providing a fuel supplied to one or more combustors in a gas turbine engine system includes partially oxidizing a fraction of the fuel in one or more fuel circuits of the gas turbine combustion system, in the absence of a catalyst, with a non-catalytic fuel reformer, wherein the fraction of the fuel and oxidant are present in a fuel-rich ratio in the fuel reformer; mixing the reformate with a remaining fraction of the fuel to produce a mixed fuel stream and supplying the mixed fuel stream to the one or more combustors; and controlling at least one of fuel flow and oxidant flow to the fuel reformer with an active feedback control system.

According to still another aspect of the invention a method of controlling a Modified Wobbe Index of a fuel supplied to one or more combustors in a gas turbine engine system includes premixing an oxidant and a fraction of the fuel to a predetermined fuel-rich oxygen-to-fuel mass ratio in a non-catalytic fuel reformer; reforming the fraction of the fuel in the absence of a catalyst to produce a reformate comprising hydrogen and carbon monoxide; mixing the reformate with a remaining fraction of the fuel to produce a mixed fuel stream and supplying the mixed fuel stream to the one or more combustors; and controlling at least one of fuel flow and oxidant flow to the non-catalytic fuel reformer with an active feedback control system.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic diagram of a gas turbine engine system; and
FIG. 2 is a schematic diagram of an exemplary embodiment of a rich premixed fuel reformer in fluid communication with a fuel circuit of the gas turbine engine system of FIG. 1.

The detailed description explains embodiments of the invention, together with advantages and features, by way of example with reference to the drawings.

### DETAILED DESCRIPTION OF THE INVENTION

Described herein are gas turbine engine combustion systems, and more particularly, methods and apparatus for rich premixed fuel reforming to enhance the operability of the combustion systems. The gas turbine engine combustion systems utilize a non-catalytic fuel reformer in fluid communication with one or more of the fuel circuits to partially oxidize a portion of the fuel stream feeding the gas turbine. The fuel reformer provides a means to control the MWI into the gas turbine within fixed set points, regardless of the MWI of the incoming fuel stream, and in the absence of expensive catalysts. Gas turbines are increasingly exposed to Wobbe variation as gas fuel sources become more diverse, in part due to penetration in the markets of liquid natural gas and also in part due to new environmental technologies, such a biofuels and synthetic gases. Controlling the MWI into the gas turbine to fixed set points with the fuel reformer will reduce the effect of this variation in fuel source MWI. Moreover, the non-catalytic fuel reformer can improve combustor performance such as flame stability and emissions by doping the fuel with small amounts of hydrogen and/or carbon monoxide (CO). The non-catalytic fuel reformer is in operative communication with an engine control system to provide the fuel conditioning as needed to achieve the required emissions control (e.g., NOx, yellow plume (visible N0₂), etc.) or operability (e.g. combustion pressure oscillations, also known as combustion dynamics or dynamics). As used herein, the term "fuel reformer" generally refers to a thermal reactor, or conventional combustor, configured to reform fuel premixed with an oxidant in a near-stoichiometric or rich (i.e., oxygen-deficient) environment. The fuel reformer as described herein does not utilize a catalyst, thereby eliminating regular maintenance necessary to recharge the catalyst and the costs associated therewith.

The choice of near-stoichiometric or fuel-rich operation depends on the particular objectives of the system being designed and will be predetermined. If the objective is primarily to control MWI, the reformer can operate near the stoichiometric fuel-air ratio, and the reformate will be a non-flammable combustion product comprising mostly H₂O and CO₂, with a small proportion of CO, and a balance of inert gas (N₂) as may be introduced with the oxidant. The temperature of the reformate will be relatively high, and relatively high concentrations of NOₓ will be produced in the reformate before it is blended back into the main fuel gas stream. Conversely, if the objectives are both control of MWI and production of small amounts of hydrogen and CO, while limiting NOₓ production, the reformer can be operated in the fuel-rich regime, below the reformate temperature at which high concentrations of NOₓ are produced.

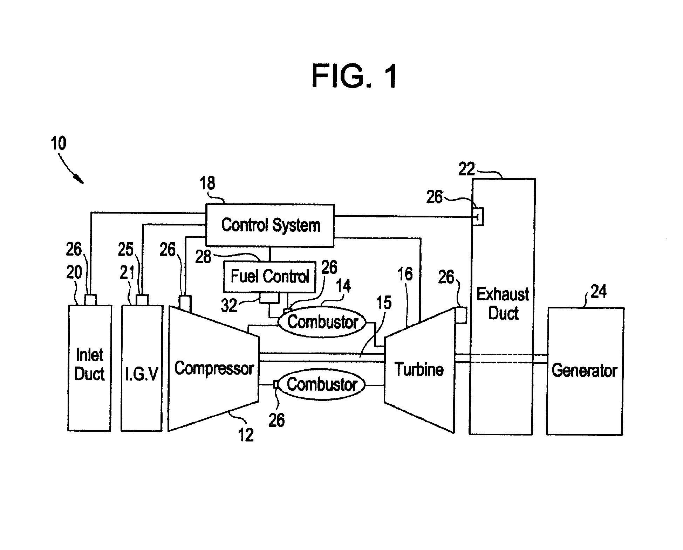

FIG. 1 is a schematic diagram of a gas turbine engine system 10 including a compressor 12, a combustor 14, and a turbine 16 coupled by a drive shaft 15 to the compressor 12. As seen in the figure, the system 10 can have a single combustor or a plurality of combustors (two shown in the figure). In one embodiment, the combustors are DLN combustors. In another embodiment, the combustors are lean premixed combustors. The gas turbine engine is managed by a combination of operator commands and a control system 18. An inlet duct system 20 channels ambient air to the compressor inlet guide vanes 21 which, by modulation with actuator 25, regulates the amount of air to compressor 12. An exhaust system 22 channels combustion gases from the outlet of turbine 16 through, for example, sound absorbing, heat recovery and possibly emissions control devices. Turbine 16 may drive a generator 24 that produces electrical power or any other type of mechanical load.

The operation of the gas turbine engine system 10 may be monitored by a variety of sensors 26 detecting various conditions of the compressor 12, turbine 16, generator 24, and ambient environment. For example, sensors 26 may monitor ambient temperature, pressure and humidity surrounding gas turbine engine system 10, compressor discharge pressure and temperature, turbine exhaust gas temperature and emissions, and other pressure and temperature measurements within the gas turbine engine. Sensors 26 may also comprise flow sensors, speed sensors, flame detector sensors, valve position sensors, guide vane angle sensors, dynamic pressure sensors, and other sensors that sense various parameters relative to the operation of gas turbine engine system 10. As used herein, "parameters" refer to physical properties whose values can be used to define the operating conditions of gas turbine engine system 10, such as temperatures, pressures, fluid flows at defined locations, and the like.

In addition to the above-mentioned sensors 26 there may be one or more sensors to monitor, measure or infer fuel properties sufficiently to determine the fuel composition prior to and/or after the non-catalytic fuel reformer 32 described below. The sensors may sense one or more of the following: fractional (fuel) composition, hydrogen content, carbon monoxide content, a parameter representative of the fuel MWI, fuel temperature, fuel and oxidant flow rates, products temperature, and the like.

A fuel controller 28 responds to commands from the control system 18 to continuously regulate the fuel flowing from a fuel supply to the combustor(s) 14, and the fuel splits (independently controlled fuel supply to fuel circuits) to multiple fuel nozzle injectors (i.e., fuel circuits) located within each of the combustor(s) 14. Fuel control system 28 may also be directed by the controller 18 to select the type of fuel or a mix of fuels for the combustor if more than one fuel is available. By modulating fuel splits via the fuel controller 28 among the several fuel gas control valves, and controlling the partial fuel reforming in one or more of the fuel injectors with the control system 18, emissions and dynamics are improved over the machine load range.

The control system 18 may be a computer system having a processor(s) that executes programs to control the operation of the gas turbine using the sensor inputs described above and instructions from additional operators. The programs executed by the control system 18 may include scheduling algorithms for regulating fuel flow, fuel reforming, and fuel splits to combustor(s) 14. More specifically, the commands generated by the control system cause actuators in the fuel controller 28 to regulate the flow to both the non-catalytic fuel reformer 32 and the fuel nozzle injectors, adjust inlet guide vanes 21 on the compressor, regulate the flow of an oxidant source to the non-catalytic fuel reformer 32, or control other system settings on the gas turbine.

The algorithms thus enable control system 18 to maintain the combustor firing temperature and exhaust temperature to within predefined temperature limits and to maintain the turbine exhaust NOx and CO emissions to below predefined limits at part-load through full load gas turbine operating conditions. The combustors 14 may be a DLN combustion system, and the control system 18 may be programmed and modified to control the fuel splits for the DLN combustion system according to the predetermined fuel split schedules, modified by a tuning process which occurs after every major combustor and gas turbine maintenance outages to improve emissions and combustion dynamics. Combustor fuel splits are also set by the periodic tuning process to satisfy performance objectives while complying with operability boundaries of the gas turbine. All such control functions have a goal to improve operability, reliability, and availability of the gas turbine.

The non-catalytic fuel reformer 32 is in fluid communication with the fuel flow of one or more fuel circuits (not shown) in the fuel control system 28. Again, the non-catalytic fuel reformer 32 is configured to partially reform a portion of the fuel fed to the gas turbine to increase fuel reactivity. The non-catalytic fuel reformer as described herein is configured to pre-bum (i.e., partially oxidize) a portion of the fuel stream feeding the gas turbine. The non-catalytic fuel reformer is fed a mixture of oxidant and fuel, wherein the fuel and oxidant is premixed and then burned in the non-catalytic fuel reformer. The oxidant can be supplied to the non-catalytic fuel reformer by the compressor 12 or it may be provided by a separate oxidant supply. Exemplary oxidants to be provided to the non-catalytic fuel reformer can include, without limitation, pure oxygen, air, oxygen-enriched air, combinations thereof, and the like.

The fuel and oxidant are premixed to a ratio that is fuel-rich, oxygen-depleted. An exemplary mixture ratio of oxygen-to-fuel will be sufficiently reactive to support a conventional flame in the non-catalytic fuel reformer without the flame temperature being so high as to generate appreciable concentrations of NOx. The range of acceptable mixture ratios in the non-catalytic fuel reformer, therefore, is fairly narrow between these two limits and will depend in large part on the composition of the fuel entering the reformer. In one embodiment, the mass ratio of oxygen-to-fuel is generally in the range of about 1.5:1 to about 4:1, and more specifically about 2.3:1, where the fuel is methane. In an exemplary embodiment, where the gas turbine combustion system is utilizing methane fuel and air as oxidant, the mass ratio of air-to-fuel is 10: 1. Such a fuel-rich, oxygen-depleted premixed mixture in the non-catalytic fuel reformer when combusted produces carbon dioxide, carbon monoxide, hydrogen, and water from the methane. When air or oxygen-enriched air is used in the non-catalytic fuel reformer, nitrogen is generally present in the combustion products as an inert gas that passes through the reaction. The reformate is then blended back in with the balance of the fuel stream

In another exemplary embodiment, with air as the oxidant and methane as the fuel, the mass ratio of air-to-fuel is generally between about 20:1 to 5:1; specifically about 18:1 to 10:1; and more specifically about 17:1. Such a near-stoichiometric fuel-air mixture will result in reformate containing predominantly H₂O, CO₂, and N₂, with very small amounts of H₂ and CO. The resulting mixture will be sufficiently oxygen-depleted that it is no longer flammable, and carries no risk of further combustion when blended back into the fuel stream. The objective of this embodiment is MWI control alone.

The amount of the fuel reformed in the non-catalytic fuel reformer 32 can be adjusted to control the fuel MWI within predetermined limits to compensate for incoming fuel composition variation. Control of the proportion of fuel diverted to the non-catalytic fuel reformer is a means of controlling the Wobbe Index of the resultant mixed fuel stream. The MWI is reduced to its predetermined target value by a combination of the inclusion of inert species (e.g., nitrogen, water) in the mixed fuel stream and the exothermic nature of the reaction. As mentioned previously, MWI is an important parameter in a lean combustor and is a function of temperature (density), as well as fuel composition. Using the non-catalytic fuel reformer 32 with DLN or lean, premixed combustion systems provides a system that is more tolerant to MWI variation in the fuel stream than current lean combustion systems without such a reformer. Moreover, the hydrogen and carbon monoxide present in the reformate provide reactive species that extend lean limits of the gas turbine combustor. The increased fuel reactivity allows the combustor to be turned down further without going out of CO emissions limits. The increased chemical reactivity of the fuel can also help to greatly reduce the formation of NOx in the combustor, because a more reactive fuel does not require the fuel nozzle(s) to be run at such a high flame temperature. Therefore, as mentioned previously, reducing the maximum flame temperature of the fuel nozzle(s) will greatly reduce the formation of NOx in the combustor.

The non-catalytic fuel reformer 32 can be used to partially reform any fuel typically used in gas turbine engine combustion systems, such as natural gas (methane) and other like gaseous-phase fuels. The non-catalytic fuel reformer 32 is configured to partially oxidize a small percentage of the fuel to form hydrogen, carbon monoxide, and other combustion products. The non-catalytic fuel reformer can reform about 0.1 1 volume percent (vol%) to about 100 vol% of the fuel, specifically about 0.5 vol% to about 50 vol%, more specifically about 0.8 vol% to about 5 vol%, and even more specifically about 1 vol% to about 2 vol%. The desired percentage of fuel reformed can depend on a number of factors such as, without limitation, turbine load, fuel type, water and/or oxidant additives, fuel temperature, emissions, and the like. The control system 18 can be configured to regulate fuel flow to the non-catalytic fuel reformer 32 and control the percentage of fuel reformed based on feedback from any of the sensors 26.

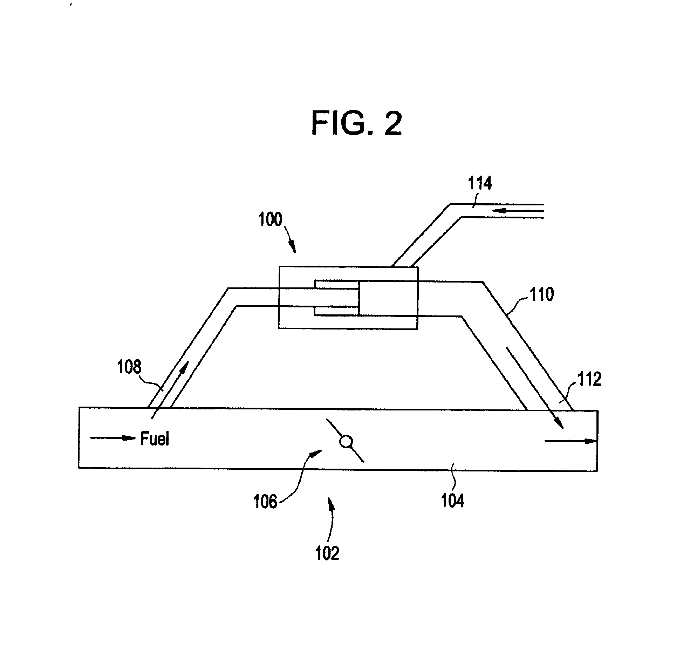

The non-catalytic fuel reformer can be disposed in any location in fluid communication with the fuel system of the gas turbine combustion system wherein the non-catalytic fuel reformer can receive at least a portion of the fuel. The non-catalytic fuel reformer system can be in fluid communication with one fuel circuit of the combustor or a plurality of the fuel circuits. Moreover, a gas turbine combustion system can comprise a single non-catalytic fuel reformer or a plurality of non-catalytic fuel reformers in fluid communication with one or more of the fuel circuits. FIG. 2 illustrates an exemplary embodiment of a non-catalytic fuel reformer 100 in fluid communication with a fuel circuit 102. The non-catalytic fuel reformer 100 is disposed outside the fuel conduit 104 such that a portion of the fuel flowing through the conduit must be diverted to pass through the reformer. A portion of the fuel can be diverted into the non-catalytic fuel reformer 100 through the operation of a valve system. In the embodiment of FIG. 2, a throttle valve 106 is shown disposed the fuel conduit 104. The throttle valve 106 is disposed downstream of the inlet 108 to the fuel reformer bypass 110 and upstream of the outlet 112 from the fuel reformer bypass 110. The throttle valve 106 is configured to controllably divert a portion of the fuel from the fuel conduit 104 to the fuel reformer bypass 110 by creating a pressure drop across the non-catalytic fuel reformer 100. In another embodiment, by-pass valves (not shown) can be disposed at the inlet 108 and/or outlet 112 locations of the fuel reformer bypass 110 to actively control fuel flow thereto. The throttle valve 106 (and/or by-pass valves), as well as the non-catalytic fuel reformer 100, can be in operative communication with an engine control system to provide on-demand reformation of a specific portion of the turbine fuel. Moreover, with the use of by-pass valves, the non-catalytic fuel reformer 100 can be isolated from the fuel circuit 102 and serviced without interruption of the fuel flow to the gas turbine combustor. An oxidant inlet 114 is in fluid communication with the non-catalytic fuel reformer 100 and is configured to provide oxygen for premixing with the fuel before combustion in the fuel reformer. The oxidant inlet 114 can be in fluid communication with the compressor of the gas turbine or it can be in fluid communication with a separate oxidant supply. Again, the oxidant inlet 114 can supply oxygen, air, oxygen-enriched air, or combinations thereof to the non-catalytic fuel reformer 100.

The non-catalytic fuel reformer described herein is in operative communication with an engine control system configured to provide control of the fraction of the fuel reformed, and therefore, control of the MWI of the mixed fuel stream fed to the gas turbine combustor. The control system can monitor feedback from sensors, thermocouples, and the like that can detect, among other things, the fuel fraction diverted to the non-catalytic fuel reformer and the MWI of the incoming fuel stream. The control system further monitors process conditions, such as temperatures and pressures, throughout the gas turbine engine combustion system. Such a control system can be employed to adjust fuel feed rates, fuel pressures, valve operation of the fuel reformer bypass, adjust supplementary process gas feed rates (e.g., feed rate from the oxidant inlet), or control other like conditions within the gas turbine system. A fuel gas analysis subsystem can further be included to provide additional feedback to such a control system. The control system can operate and control the fuel reformer based on any number of process parameters. Feedback from sensors, thermocouples, and the like also alert the control system to various other conditions within the gas turbine system. Exemplary process parameters can include, without limitation, temperature (e.g., ambient temperature, fuel temperature, nozzle temperature, combustor temperature, and the like), humidity, inlet pressure loss, dynamic pressure, exhaust backpressure, exhaust emissions (e.g., NOx, CO, UHC, and the like), turbine load/power, a parameter representative of fuel MWI, and the like. This feedback loop between the parameters monitoring and the control system can indicate the need to alter the MWI of the mixed fuel stream or the reactivity of the fuel, and therefore, change the mixture ratio within the non-catalytic fuel reformer by changing one or both of the fuel flow and oxidant flow thereto. When certain parameters reach a predetermined target, it may be suitable to alter the portion of the fuel being reformed or even momentarily cease reforming altogether.

The non-catalytic fuel reformer and method of its use in a gas turbine engine combustion system as described herein can advantageously reform a portion of fuel in one or more fuel circuits to control the MWI of the fuel feeding the turbine combustor despite variation of MWI in the incoming fuel stream. Moreover, the non-catalytic fuel reformer is further configured to increase the fuel reactivity. The fuel reformer system is in operative communication with an active feed back control system to provide fuel conditioning as required to control the MWI to fixed set points for the fuel entering the gas turbine and achieve desired emissions (e.g., NOx, CO, yellow plume, turn down, and the like). The non-catalytic fuel reformer can permit current gas turbines with current low-emissions combustions systems to be used in markets where fuel variability normally precludes the application of lean, premixed combustion systems, or at least greatly reduces their low-emissions effectiveness due to dynamic combustion instability. Moreover, greater load turndown can be achieved by the gas turbines due to the extension of lean limits by the doping of hydrogen and carbon monoxide in the fuel via the non-catalytic fuel reformer. Further, the non-catalytic fuel reformer as described herein does not require a catalyst and does not promote a catalytic reaction therein. There is no concern, therefore, with the catalyst becoming poisoned or requiring regularly scheduled recharging that causes reformer downtime.

The terminology used herein is for the purpose of describing particular embodiments only and is not intended to be limiting of the invention. Ranges disclosed herein are inclusive and combinable (e.g., ranges of "up to about 25 vol%, or, more specifically, about 5 vol% to about 20 vol%", is inclusive of the endpoints and all intermediate values of the ranges of "about 5 vol% to about 25 vol%," etc.). "Combination" is inclusive of blends, mixtures, alloys, reaction products, and the like. Furthermore, the terms "first," "second," and the like, herein do not denote any order, quantity, or importance, but rather are used to distinguish one element from another, and the terms "a" and "an" herein do not denote a limitation of quantity, but rather denote the presence of at least one of the referenced item. The modifier "about" used in connection with a quantity is inclusive of the stated value and has the meaning dictated by context, (e.g., includes the degree of error associated with measurement of the particular quantity). The suffix "(s)" as used herein is intended to include both the singular and the plural of the term that it modifies, thereby including one or more of that term (e.g., the colorant(s) includes one or more colorants). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments

Unless otherwise defined, all terms (including technical and scientific terms) used herein have the same meaning as commonly understood by one of ordinary skill in the art to which the embodiments of the invention belong. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

For completeness, various aspects of the invention are now set out in the following numbered clauses:
1. A gas turbine engine system, comprising:
   a compressor, a combustor, and a turbine;
   a fuel system comprising one or more fuel circuits configured to provide fuel from a fuel flow to the combustor;
   a non-catalytic fuel reformer in fluid communication with the one or more fuel circuits, wherein the non-catalytic fuel reformer is configured to receive an oxidant from an oxidant flow and a fraction of fuel in the one or more fuel circuits in a predetermined ratio and reform the fraction of the fuel to produce a reformate; and
   a control system configured to regulate at least one of fuel flow and oxidant flow to the non-catalytic fuel reformer to control a Modified Wobbe Index of the fuel entering the combustor.
2. The system of clause 1, wherein the non-catalytic fuel reformer further comprises a bypass conduit having an inlet and an outlet and configured to divert the fraction of the fuel to the non-catalytic fuel reformer.
3. The system of clause 2, further comprising at least one of a throttle valve and a bypass valve configured to control the flow of the fuel through the bypass conduit.
4. The system of clause 3, wherein the throttle valve is disposed in the one or more fuel circuits downstream of the bypass conduit inlet and upstream of the bypass conduit outlet and configured to create a pressure drop across the non-catalytic fuel reformer.
5. The system of clause 2, wherein the bypass valve is disposed in at least one of the inlet and the outlet of the bypass conduit.
6. The system of clause 1, wherein the reformate comprises hydrogen, carbon dioxide, and carbon monoxide.
7. The system of clause l, wherein the combustor is at least one of a Dry Low NOx and a lean, premixed combustor.
8. The system of clause 1, wherein the oxidant comprises oxygen, air, oxygen-enriched air, or a combination comprising at least one of the foregoing.
9. The system of clause 1, wherein the non-catalytic fuel reformer further comprises an oxidant inlet configured to deliver the oxidant to the non-catalytic fuel reformer.
10. The system of clause 9, wherein the oxidant inlet is in fluid communication with the compressor.
11. The system of clause 1, wherein the fuel comprises methane.
12. The system of clause 11, wherein the predetermined ratio is a fuel-rich oxygen-to-methane mass ratio of about 2.3:1.
13. The system of clause 11, wherein the predetermined ratio is a near-stoichiometric air-to-methane mass ratio of about 17:1 and wherein the reformate comprises a non-flammable combustion product.
14. A method for providing a fuel supplied to one or more combustors in a gas turbine engine system, comprising:
   partially oxidizing a fraction of fuel in one or more fuel circuits of the gas turbine engine system, in the absence of a catalyst, with a non-catalytic fuel reformer to form a reformate, wherein the fraction of fuel and an oxidant are present in a predetermined ratio in the non-catalytic fuel reformer;
   mixing the reformate with a remaining fraction of fuel to produce a mixed fuel stream and supplying the mixed fuel stream to the one or more combustors; and
   controlling at least one of fuel flow and oxidant flow to the non-catalytic fuel reformer with an active feedback control system.
15. The method of clause 14, wherein the fraction of the fuel is about 1 volume percent to about 2 volume percent of the total volume of fuel in the one or more fuel circuits.
16. The method of clause 14, wherein the controlling at least one of oxidant flow and fuel flow to the non-catalytic fuel reformer further comprises monitoring a selected one or more of fuel temperature, fuel composition, fuel Modified Wobbe Index, humidity, dynamic pressure, ambient temperature, and turbine load.
17. The method of clause 14, wherein the predetermined ratio comprises a selected one of a fuel-rich mass ratio and a near-stoichiometric mass ratio.
18. A method of controlling a Modified Wobbe Index of a fuel from a fuel flow supplied to one or more combustors in a gas turbine engine system, comprising:
   premixing an oxidant from an oxidant flow and a fraction of fuel to a predetermined oxygen-to-fuel mass ratio in a non-catalytic fuel reformer;
   reforming the fraction of fuel in the absence of a catalyst to produce a reformate comprising hydrogen, carbon dioxide and carbon monoxide;
   mixing the reformate with a remaining fraction of fuel to produce a mixed fuel stream and supplying the mixed fuel stream to the one or more combustors; and
   controlling at least one of fuel flow and oxidant flow to the non-catalytic fuel reformer with an active feedback control system.
19. The method of clause 18, wherein the reformate further comprises water and nitrogen.
20. The method of clause 18, wherein the controlling at least one of oxidant flow and fuel flow to the non-catalytic fuel reformer further comprises monitoring a selected one or more of fuel temperature, fuel composition, fuel Modified Wobbe Index, humidity, dynamic pressure, ambient temperature, and turbine load.

## Claims

1. A gas turbine engine system (10), comprising:
a compressor (12), a combustor (14), and a turbine (16);
a fuel system (20) comprising one or more fuel circuits (102) configured to provide fuel from a fuel flow to the combustor;
a non-catalytic fuel reformer (32, 100) in fluid communication with the one or more fuel circuits, wherein the non-catalytic fuel reformer is configured to receive an oxidant from an oxidant flow and a fraction of fuel in the one or more fuel circuits in a predetermined ratio and reform the fraction of the fuel to produce a reformate; and
a control system (18) configured to regulate at least one of fuel flow and oxidant flow to the non-catalytic fuel reformer to control a Modified Wobbe Index of the fuel entering the combustor.

2. The system (10) of claim 1, wherein the non-catalytic fuel reformer (100) further comprises a bypass conduit (110) having an inlet (108) and an outlet (112) and configured to divert the fraction of the fuel to the non-catalytic fuel reformer.

3. The system (10) of claim 3, further comprising at least one of a throttle valve (106) and a bypass valve configured to control the flow of the fuel through the bypass conduit.

4. The system (10) of claim 3, wherein the throttle valve (106) is disposed in the one or more fuel circuits(102) downstream of the bypass conduit inlet (108) and upstream of the bypass conduit outlet (112) and configured to create a pressure drop across the non-catalytic fuel reformer (100).

5. The system (10) of claim 2, wherein the bypass valve is disposed in at least one of the inlet and the outlet of the bypass conduit (110).

6. The system ( 10) of any of the preceding claims, wherein the non-catalytic fuel reformer (100) further comprises an oxidant inlet (114) configured to deliver the oxidant to the non-catalytic fuel reformer.

7. The system (10) of any of the preceding claims, wherein the predetermined ratio is a fuel-rich oxygen-to-methane mass ratio of about 2.3:1.

8. The system (10) of any of the preceding claims, wherein the predetermined ratio is a near-stoichiometric air-to-methane mass ratio of about 17:1 and wherein the reformate comprises a non-flammable combustion product.

9. A method of controlling a Modified Wobbe Index of a fuel from a fuel flow supplied to one or more combustors (14) in a gas turbine engine system (10), comprising:
premixing an oxidant from an oxidant flow and a fraction of fuel to a predetermined oxygen-to-fuel mass ratio in a non-catalytic fuel reformer (32, 100);
reforming the fraction of fuel in the absence of a catalyst to produce a reformate comprising hydrogen, carbon dioxide and carbon monoxide;
mixing the reformate with a remaining fraction of fuel to produce a mixed fuel stream and supplying the mixed fuel stream to the one or more combustors; and
controlling at least one of fuel flow and oxidant flow to the non-catalytic fuel reformer with an active feedback control system (18).

10. The method of claim 9, wherein the controlling at least one of oxidant flow and fuel flow to the non-catalytic fuel reformer (32, 100) further comprises monitoring a selected one or more of fuel temperature, fuel composition, fuel Modified Wobbe Index, humidity, dynamic pressure, ambient temperature, and turbine load.
